# EUROPÄISCHE PATENTSCHRIFT

(11) **EP 1 143 066 B1**
(45) Veröffentlichungstag und Bekanntmachung des Hinweises auf die Patenterteilung: **07.09.2005**
(21) Anmeldenummer: 01102364.5
(22) Anmeldetag: 02.02.2001
(51) Int. Cl.: D21D 5/26

(54) **Vorrichtung zum Entgasen von Faserstoffsuspension**
Device for degassing fibrous suspension
Dispositif de dégazage de suspension fibreuse

(30) Priorität: 05.04.2000 DE 10017037
(43) Veröffentlichungstag der Anmeldung: 10.10.2001
(73) Patentinhaber: Voith Paper Patent GmbH, 89522 Heidenheim (DE)
(72) Erfinder: Binder, Erwin, 89522 Heidenheim (DE); Beuermann, Karl-Heinz, 89518 Heidenheim (DE)

(56) Entgegenhaltungen:
- WO-A-97/15717
- DE-A- 4 234 522

## Beschreibung

Die Erfindung betrifft eine Vorrichtung zum Entgasen von Faserstoffsuspension gemäß dem Oberbegriff der Ansprüche 1 und 2.

Vorrichtungen zum Entgasen von Faserstoffsuspensionen sind den Fachleuten der Branche bestens bekannt. Ihrem Namen nach sollen die Vorrichtungen Faserstoffsuspensionen entgasen. Gleichzeitig werden durch die Vorrichtungen auch andere leichte Verunreinigungen entfernt, die ansonsten die Papier- oder Kartonherstellung stören würden. Die Vorrichtungen sind große Behälter, den die der Papier- oder Kartonmaschine aufzugebende Faserstoffsuspension als dünnes Gemisch zugeführt wird. Das Funktionsprinzip der Vorrichtung besteht darin, die Faserstoffsuspension unter Unterdruck sieden zu lassen und das Gas dadurch in einen sogenannten Gasraum und aus dem Behälter abzuscheiden und die anderen leichten Verunreinigungen auf der Flüssigkeitsoberfläche im Behälter ausscheiden zu lassen. Die der Papier- oder Kartonmaschine zuzuführende Faserstoffsuspension wird dagegen durch eine Öffnung im Behälterboden entnommen, was natürlich mit dem Gedanken verbunden ist, möglichst gasfreie Faserstoffsuspension aus dem Behälter abzuleiten. Um die Entgasungsfähigkeit der Vorrichtung zu maximieren, wird im Behälter mittels einer Pumpe ein Unterdruck erzeugt, wobei das Gas durch die Unterdruckpumpe (Vakuumpumpe) mit Leitung aus dem Behälter entweicht. Darüber hinaus wird die Entgasungsfähigkeit verbessert, indem die zugeführte, noch Gas enthaltende Faserstoffsuspension durch Strahlrohre oberhalb des Flüssigkeitsstands im Behälter eingegeben wird, wobei das in der zugegebenen Faserstoffsuspension eventuell als Blasen vorhandene Gas bereits abgeschieden wird, bevor die zugegebene Faserstoffsuspension mit der bereits vorhandenen Faserstoffsuspension in Verbindung kommt. Ausser zur Stabilisierung des Flüssigkeitsstands wird der (einzige) Überlauf zur Entfernung von auf der Flüssigkeitsoberfläche des Behälters angesammelten leichten Verunreinigungen benutzt, damit sie nicht zur Papier- oder Kartonmaschine gelangen. Die leichten Verunreinigungen fließen über den (einzigen) Überlauf zum Ablauf und anschließend zur Weiterbehandlung (Cleaner oder Sortierer), wo man bestrebt ist, sie aus der Faserstoffsuspension abzuscheiden und die Faserstoffsuspension in den Kreislauf zurückzuführen.

Die deutsche Offenlegungsschrift DE 42 34 511 A1 offenbart einen in der Papier- und Zellstoffindustrie verwendeten Entgasungsbehälter gemäß dem vorgenannten Oberbegriff der vorliegenden Erfindung. Die den Überlauf für die abgeschiedene, überschüssige Faserstoffsuspension bildende Trennwand ist dabei im wesentlichen auf gleicher Höhe mit der Hinterkante des Ablaufstutzens für gasfreie Suspension angeordnet und der Überlauf für die abgeschiedene, überschüssige Faserstoffsuspension selbst ist zum Ablaufstutzen hin entgegen der Strömungsrichtung im Behälter geneigt oder gebogen.
Weitere Offenbarungen hinsichtlich der Lage und Form der den Überlauf für die abgeschiedene, überschüssige Faserstoffsuspension bildenden Trennwand lassen sich in der deutschen Offenlegungsschrift DE 32 19 749 A1, in der PCT-Anmeldung WO 97/15717 und dem US-Patent 5,868,905 finden.

Allen genannten Schriften sind hinsichtlich des Überlaufs für die abgeschiedene, überschüssige Faserstoffsuspension die Nachteile gemeinsam, dass die Trennwand quer und symmetrisch zur Behälterachse (Längsachse) angeordnet ist, dass ihre Lage aufgrund ihrer Form konstruktiv vorgegeben ist, dass heisst, dass sie in einem der beiden Endbereiche des Behälters plaziert ist, und dass desweiteren auch ihre Überlauflänge konstruktiv vorgeben ist.

Es ist also Aufgabe der Erfindung, eine Vorrichtung der eingangs genannten Art zu schaffen, mit welcher der Überlauf für die abgeschiedene, überschüssige Faserstoffsuspension unabhängig von der Lage des mindestens einen Einlaufs beziehungsweise Zulaufs für die Faserstoffsuspension und des mindestens einen Auslaufs für die vorzugsweise entgaste Faserstoffsuspension angeordnet werden kann.

Erfindungsgemäß wird diese Aufgabe bei einer Vorrichtung gemäß dem Oberbegriff der Anspruchs 1 dadurch gelöst, dass der mindestens einen Austrittsöffnung für die abgeschiedene, überschüssige Faserstoffsuspension -in Strömungsrichtung derselben gesehen- ein als Überlaufrohr ausgebildeter Überlauf mit einer Überlaufhöhe und einer Überlauflänge vorgeordnet ist.

Weiterhin wird erfindungsgemäß diese Aufgabe bei einer Vorrichtung gemäß dem Oberbegriff der Anspruchs 2 dadurch gelöst, dass der mindestens einen Austrittsöffnung für die gasfreie Faserstoffsuspension -in Strömungsrichtung derselben gesehen- ein Verweilbehälter in Form eines hydraulischen Stabilisators nachgeordnet ist, bestehend aus einem, vorzugsweise langgestreckten und liegenden zylindrischen, Behälter, mindestens einer Eintrittsöffnung zum Einführen von aus dem -in Strömungsrichtung der gasfreien Faserstoffsuspension gesehen- vorgeschalteten Behälter kommenden Faserstoffsuspension in den Behälter, mindestens je einer im Behälter angebrachten Austrittsöffnung für mindestens eine gasfreie Faserstoffsuspension, für ein abgeschiedenes Gas und für mindestens eine mittels eines Überlaufs abgeschiedene, überschüssige Faserstoffsuspension, mindestens einer Austrittsöffnung für die abgeschiedene, überschüssige Faserstoffsuspension, der -in Strömungsrichtung derselben gesehen- ein als Überlaufrohr ausgebildeter Überlauf mit einer Überlaufhöhe und einer Überlauflänge vorgeordnet ist.

Durch die Ausbildung des Überlaufs für die abgeschiedene, überschüssige Faserstoffsuspension als Überlaufrohr mit einer Überlaufhöhe und einer Überlauflänge wird sowohl der konstruktive als auch strömungstechnische Vorteil erzielt, dass der Überlauf für die abgeschiedene, überschüssige Faserstoffsuspension in jeder beliebigen Lage im Behälter angeordnet werden kann; er muss also nicht mehr quer und symmetrisch zur Behälterachse in einem der beiden Endbereiches des Behälters plaziert sein und seine Überlauflänge kann in einem bestimmten Bereich konstruktiv frei gewählt werden.

In Fortführung des Erfindungsgedankens weist das Überlaufrohr einen trichterförmigen Anfangsbereich mit einem Öffnungswinkel auf. Der Öffnungswinkel nimmt einen Wert zwischen 30° und 80°, vorzugsweise zwischen 40° und 50°, an. Die derartige Ausgestaltung des Anfangsbereichs erbringt den Vorteil, dass die Öffnungsfläche des Überlaufrohrs unabhängig vom weiterführenden Durchmesser des Überlaufrohrs ist. Ferner kann durch die Wahl des Öffnungswinkel die Strömungsgeometrie im Überlaufrohr positiv beeinflusst werden.

In einer Ausgestaltung der Erfindung ist vorgesehen, dass das Überlaufrohr einen teleskopartigen Aufbau besitzt und die Überlaufhöhe somit veränderbar ist. Durch die Veränderbarkeit der Überlaufhöhe ergibt sich die Möglichkeit, dass der Flüssigkeitsstand im Behälter gesteuert beziehungsweise bei Vorhandensein einer Antriebseinheit samt Regelung geregelt werden kann, wobei der Flüssigkeitsstand maßgeblich die Verweildauer und das Verweilvolumen der Faserstoffsuspension im Behälter beeinflusst. Der teleskopartige Aufbau des Überlaufrohrs stellt einen Verschiebemechanismus dar, der technisch ausgereift, betriebssicher und günstig in Anschaffung, Betrieb und Wartung ist.

In einer weiteren Ausgestaltung der Erfindung ist vorgesehen, dass das Überlaufrohr samt Ableitung verschiebbar ausgebildet ist und die Überlaufhöhe somit veränderbar ist. Es ergeben sich somit die soeben beschriebenen Vorteile. Weiterhin weist die Ableitung des Überlaufrohrs ein in seiner Länge und Form veränderbares Zwischenstück auf, so dass es trotz Verschiebung des Überlaufrohrs am weiterführenden Leistungssystem zu keinen lokalen Verschiebungen kommt. Das Zwischenstück ist in bevorzugter Weise als gefalteter Schlauch oder dergleichen ausgebildet.

In weiterer Fortführung des Erfindungsgedankens besitzt das Überlaufrohr einen teleskopartigen und divergenten Aufbau, womit die Überlauflänge veränderbar ist. Durch eine vergrößerte Überlauflänge wird der Vorteil einer weiteren Beruhigung infolge einer weniger gerichteten Strömung in der abgeschiedenen, überschüssigen Faserstoffsuspension.

In einer vorteilhaften Ausgestaltung der Erfindung ist das Überlaufrohr mit mindestens einem Rohrteil koppelbar ist und die Überlaufhöhe und/oder die Überlauflänge somit veränderbar ist beziehungsweise sind. Je nach Form des Rohrteils gibt sich die Möglichkeit und der Vorteil der gezielten Beeinflussung der Überlaufhöhe und/oder Überlauflänge, ohne dabei auf kostspielige und funktionskritische Mechanismen zurückgreifen zu müssen.

Weiterhin ist erfindungsgemäß vorteilhaft, wenn die Austrittsöffnung für die abgeschiedene, überschüssige Faserstoffsuspension -in Strömungsrichtung derselben gesehen- räumlich zwischen der mindestens einen Eintritts- beziehungsweise Zufuhröffnung für die Faserstoffsuspension und der Austrittsöffnung für die gasfreie Faserstoffsuspension angeordnet ist. Somit kann die mit Verschmutzung versehene Faserstoffsuspension auf direktem Wege zur Austrittsöffnung, dass heisst ohne Passierung der Austrittsöffnung für entgaste Faserstoffsuspension, geführt und entfernt werden. Dies erhöht im verstärkten Maße die Funktionssicherheit und -qualität der erfindungsgemäßen Vorrichtung.

In einer weiteren vorteilhaften Ausführung der Erfindung wird vorgeschlagen, dass im Behälter mindestens zwei Austrittsöffnungen für abgeschiedene, überschüssige Faserstoffsuspension vorhanden sind, wobei mindestens eine Austrittsöffnung mit einem als Überlaufrohr ausgebildetem Überlauf mit einer Überlaufhöhe und einer Überlauflänge versehen ist und die mindestens eine weitere Austrittsöffnung mit einem Verschlussdeckel versehen ist. Durch das Vorhandensein von mehreren genannten Austrittsöffnungen ergibt sich der technologische Vorteil, dass der mindestens eine als Überlaufrohr ausgebildete Überlauf an verschiedenen Positionen innerhalb der Behälters plaziert werden kann und seine Plazierung somit optimal auf die Eigenschaften der Faserstoffsuspension abgestimmt werden kann.

In weiterer Fortführung des Erfindungsgedankens wird auch vorgeschlagen, dass der Austrittsöffnung für die gasfreie Faserstoffsuspension -in Strömungsrichtung derselben gesehen- ein als Überlaufrohr ausgebildeter Überlauf mit einer Überlaufhöhe und einer Überlauflänge vorgeordnet ist. Auch hierbei wird sowohl der konstruktive als auch strömungstechnische Vorteil erzielt, dass der Überlauf für die gasfreie Faserstoffsuspension in jeder beliebigen Lage im Behälter angeordnet werden kann. Ferner ergibt sich der Vorteil, dass Mengenvariationen mit verschieden großen Flächen in strömungstechnisch optimaler Weise abgeführt werden können.
Hinsichtlich der Ausgestaltung dieses Erfindungsgedankens gelten selbstverständlich die zuvor gemachten Ausführungen hinsichtlich des Überlaufrohrs des Überlaufs für abgeschiedene, überschüssige Faserstoffsuspension.

Weiterhin ist es erfindungsgemäß vorteilhaft, wenn die Mittel zum Erzeugen des Unterdrucks im Behälter je ein Unterdruckanschluss, je eine Unterdruckleitung und mindestens eine Unterdruckpumpe mit Leitung sind. Es ist platt selbstverständlich, dass mehrere Unterdruckanschlüsse jeweils einzeln mit einer separaten Unterdruckleitung und einer separaten Unterdruckpumpe mit Leitung als auch mit einzelnen Unterdruckleitungen und einer gemeinsamen Unterdruckpumpe mit Leitung betrieben werden können.

In einer weiteren vorteilhaften Ausgestaltung der Erfindung ist vorgesehen, dass im oberen Innenbereich des Behälters mehrere Düsen zur Anfeuchtung der nicht mit Faserstoffsuspension berührten Behälterinnenoberfläche angebracht sind, wodurch der im Behälter ablaufende Prozess des Entgasens der Faserstoffsuspension positiv hinsichtlich Prozessgeschwindigkeit und -wirkungsgrad beeinflusst wird. Weiterhin werden durch die Anfeuchtung Belegungen mit Faserfeinstoff oder Asche vermieden.

Weiterhin ist es erfindungsgemäß vorteilhaft, wenn das Verteilungsrohr zu der Behälterachse parallel oder annähernd parallel liegt. Das Verteilungsrohr kann ferner ausserhalb oder innerhalb des Behälters liegen. Durch diese Ausgestaltung ergeben sich sowohl räumliche (Raumbedarf) als auch technologische (Verteilungsgleichmäßigkeit) Vorteile.

In einer Fortführung des Erfindungsgedankens ist der hydraulische Stabilisator für die vorzugsweise gasfreie Faserstoffsuspension ein Verweilbehälter mit einer bestimmten Verweildauer und mit einem bestimmten Verweilvolumen, wobei er zudem eine strömungstechnisch optimale Innenkontur aufweist. Die strömungstechnisch optimale Innenkontur ist die Kontur eines langgestreckten und liegenden Zylinders oder eines in Strömungsrichtung der Faserstoffsuspension ausgerichteten konischen Rohres. Dieser hydraulische Stabilisator eignet sich insbesondere für Neuanlagen zum Entgasen von Faserstoffsuspensionen, deren konstruktive Grundlagen für den jeweiligen Behälterbau in dem genannten US-Patent 5,868,905 offenbart sind.

In einer weiteren Ausführung der Erfindung ist vorgesehen, dass, basierend auf Auslegungsüberlegungen für den Konstanten Teil einer Papier- oder Kartonmaschine, die Verweildauer der vorzugsweise gasfreien Faserstoffsuspension im hydraulischen Stabilisator zwischen 2 und 60 Sekunden, vorzugsweise zwischen 5 und 20 Sekunden, und das Verweilvolumen der vorzugsweise gasfreien Faserstoffsuspension im hydraulischen Stabilisator zwischen 0,8 und 100 m³, vorzugsweise zwischen 4 und 70 m³, ist. Diese Maßangaben besitzen den Vorteil, dass mit ihnen eine optimale Auslegung des obigen Konstanten Teils und ein optimaler Betrieb der Papier- oder Kartonmaschine hinsichtlich Runnability und dergleichen sichergestellt werden.

In einer weiteren Fortführung des Erfindungsgedankens wird auch vorgeschlagen, dass der hydraulische Stabilisator der Austrittsöffnung für die vorzugsweise gasfreie Faserstoffsuspension unmittelbar oder mittelbar nachgeordnet ist.

Das bevorzugte, erfindungsgemäße Mittel zwischen der Austrittsöffnung für die vorzugsweise gasfreie Faserstoffsuspension und dem hydraulischen Stabilisator ist mindestens ein Schlauch oder eine Rohrleitung, da beiden genannten Mittel Vorteile hinsichtlich Investitionskosten, Wartungsintensität und Betriebssicherheit mit sich bringen.

Weitere Merkmale und Vorteile der Erfindung ergeben sich aus den Unteransprüchen und der nachfolgenden Beschreibung bevorzugter Ausführungsbeispiele unter Bezugnahme auf die Zeichnung.

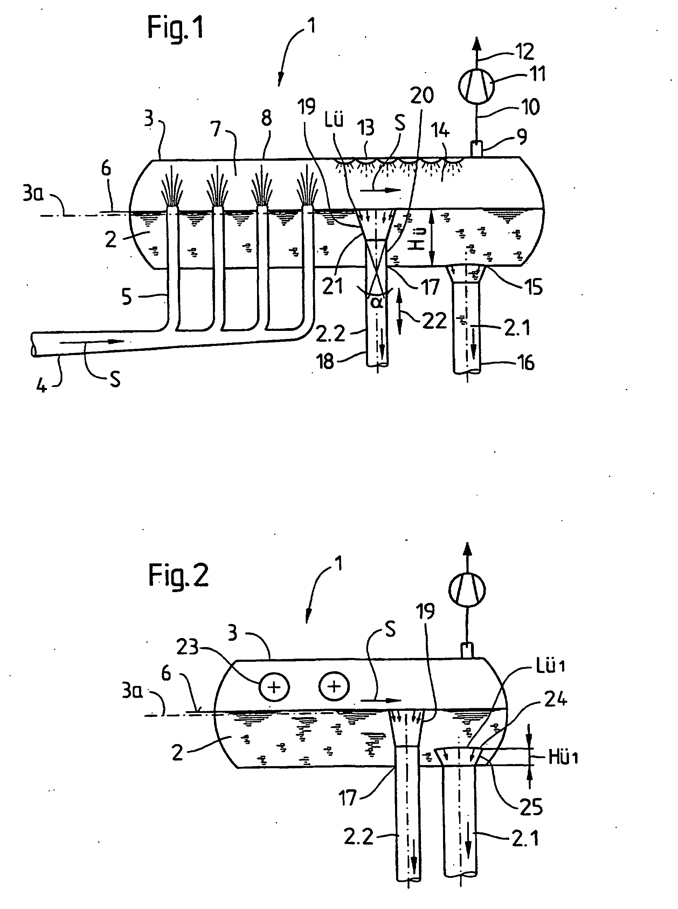

Es zeigen
- Figuren 1 bis 4:: schematisierte und geschnittene Seitenansichten von vorteilhaften Ausführungsformen der erfindungsgemäßen Vorrichtung zum Entgasen einer Faserstoffsuspension.

Der Figur 1 zufolge besteht die erfindungsgemäße Vorrichtung 1 zum Entgasen einer Faserstoffsuspension 2 aus einem langgestreckten und liegenden zylindrischen Behälter 3 mit einer Behälterachse 3a, dem die der Papier- oder Kartonmaschine aufzugebende Faserstoffsuspension 2 als dünnes Gemisch über mindestens ein zu der Behälterachse 3a paralleles Verteilungsrohr 4, von dem eine Mehrzahl von aufeinanderfolgenden Strahlrohren 5 zum Einführen von Faserstoffsuspension 2 in den Behälter 3 ausgehen, zugeführt wird. Die Strömungsrichtung S (Pfeil) der Faserstoffsuspension 2 wird übergeordnet mit einem Richtungspfeil dargestellt. Um die Entgasungsfähigkeit der Vorrichtung 1 zu verbessern, wird die zugeführte, noch Gas enthaltende Faserstoffsuspension 2 durch Strahlrohre 5 oberhalb des Flüssigkeitsstands 6 im Behälter 3 eingegeben, wobei das in der zugegebenen Faserstoffsuspension 2 eventuell als Blasen vorhandene Gas 7 bereits abgeschieden wird, bevor die zugegebene Faserstoffsuspension 2 mit der bereits im Behälter 3 vorhandenen Faserstoffsuspension 2 in Verbindung kommt. Die Strahlrohre 5 enden in dargestellter und bevorzugter Ausführung kurz vor der Behälterdecke 8, wodurch der Entgasungsprozess der Faserstoffsuspension 2 nochmals positiv unterstützt wird, da die Faserstoffsuspension 2 an die Behälterdecke 8 prallt. Die Zuführung der Faserstoffsuspension 2 kann auch, wie in Figur 2 dargestellt und näher beschrieben, mittels eines Kammernsystems erfolgen. Weiterhin kann die Zuführung der Faserstoffsuspension 2 auch gemäß mindestens einer der Arten erfolgen, wie sie in der nicht vorveröffentlichten deutschen Patentanmeldung DE 199 47 905.4 der Anmelderin offenbart sind. Im oberen Bereich der Behälterdecke 8 ist ein Unterdruckanschluss 9 mit einer Unterdruckleitung 10 angebracht, die wiederum an eine Unterdruckpumpe 11 mit einer weiterführenden, nicht vollständig dargestellten Leitung 12 angeschlossen ist; der Unterdruckanschluss 9 kann alternativ auch im seitlichen Bereich der Behälterdecke 8 angebracht sein. Durch den Anschluss des Behälters 3 an die Unterdruckpumpe 11 wird die Entgasungsfähigkeit der Vorrichtung 1 maximiert, wobei das Gas 7 durch die Unterdruckpumpe 11 aus dem Behälter 3 gepumpt wird. Weiterhin sind im den Strahlrohren 7 abgewandten Bereich der Behälterdecke 8 mehrere, nicht näher dargestellte Düsen 13 zur Anfeuchtung der nicht mit Faserstoffsuspension 2 berührten Behälterinnenoberfläche 14 angebracht. Durch diese Maßnahme wird der im Behälter 3 ablaufende Entgasungsprozess der Faserstoffsuspension 2 positiv hinsichtlich Prozessgeschwindigkeit und -wirkungsgrad beeinflusst. Im dem Verteilungsrohr 4 abgewandten Teil des Behälters 3 ist eine Austrittsöffnung 15 angeordnet, die in ein anfänglich dargestelltes Leitungssystem 16 zur Ableitung der gasfreien Faserstoffsuspension 2.1 mündet. Zwischen dem Verteilungsrohr 4 und der Austrittsöffnung 5 für die gasfreie Faserstoffsuspension 2.1 ist eine Austrittsöffnung 17 für die abgeschiedene, überschüssige Faserstoffsuspension 2.2 angeordnet, die in ein anfänglich dargestelltes Leitungssystem 18 zum Zurückführen derselben in den nicht dargestellten, dem Fachmann jedoch bekannten Kreislauf angeschlossen.
Erfindungsgemäß ist die Vorrichtung 1 nun dadurch gekennzeichnet, dass der Austrittsöffnung 17 für die abgeschiedene, überschüssige Faserstoffsuspension 2.2 -in Strömungsrichtung S (Pfeil) derselben gesehen- ein als Überlaufrohr 19 ausgebildeter Überlauf 20 mit einer Überlaufhöhe H_{Ü} und einer Überlauflänge L_{Ü} vorgeordnet ist. Das Überlaufrohr 19 kann zylindrisch ausgeführt sein oder es kann, wie in Figur 1 dargestellt, einen trichterförmigen Anfangsbereich 21 mit einem Öffnungswinkel α aufweisen. Die Überlauflänge L_{Ü} errechnet sich aus dem anfänglichen Umfang des Anfangsbereichs 21. Der Öffnungswinkel α nimmt gewöhnlicherweise eine Wert zwischen 30° und 80°, vorzugsweise zwischen 40° und 50°, an. Das Überlaufrohr 19 samt Ableitung (Leitungssystem 18) kann durch einen nicht näher dargestellten, dem Fachmann jedoch geläufigen Verschiebemechanismus gemäß dem dargestellten Doppelpfeil (Bewegungsrichtung 22) verschiebbar ausgebildet sein; hierdurch wird die Überlaufhöhe H_{Ü} in ihrer Größe verändert. Das Leitungssystem 18 weist in bevorzugter Weise ein nicht dargestelltes Zwischenstück auf, welches in seiner Länge und Form veränderbar ist, beispielsweise ein gefalteter Schlauch oder dergleichen. Das Überlaufrohr 19 kann auch einen nicht näher dargestellten, dem Fachmann jedoch geläufigen teleskopartigen und divergenten Aufbau besitzen; hierdurch wird die Überlaufhöhe H_{Ü} in ihrer Größe verändert. Weiterhin kann das Überlaufrohr mit mindestens einem nicht dargestellten Rohrteil koppelbar kann; hierdurch wird beziehungsweise werden die Überlaufhöhe H_{Ü} und/oder die Überlauflänge L_{Ü} verändert. Im Behälter 3 können auch in nicht dargestellter Weise mindestens zwei Austrittsöffnungen 17, 17.1 für abgeschiedene, überschüssige Faserstoffsuspension 2.2 vorhanden sind, wobei mindestens eine Austrittsöffnung 17 mit einem als Überlaufrohr 19 ausgebildetem Überlauf 20 mit einer Überlaufhöhe H_{Ü} und einer Überlauflänge L_{Ü} versehen ist und die mindestens eine weitere Austrittsöffnung 17.1 mit einem Verschlussdeckel versehen ist.

Eine schematisierte und geschnittene Seitenansicht einer zweiten vorteilhaften Ausführungsform der erfindungsgemäßen Vorrichtung 1 zum Entgasen einer Faserstoffsuspension 2 ist in Figur 2 dargestellt. Der Behälter 3 samt Bauteile und-gruppen der dargestellten Vorrichtung 1 ist dem Fachmann der Branche bekannt, er ist auch in der US-Patentschrift US 3,538,680 (≈ DE-A 17 61 496) offenbart. Der Inhalt dieser genannten US-Patentschrift wird hiermit zum Gegenstand dieser Die Zuführung der Faserstoffsuspension 2 in den Behälter 3 erfolgt mittels vier mit dem Behälter 3 kommunizierenden und ihr Faserstoffsuspension 2 zuführenden Kammer 23, wobei nur zwei Kammern 23 schematisch angedeutet sind. Die kommunizierenden Kammern 23 liegen oberhalb des Flüssigkeitsstands 6 der zugeführten Faserstoffsuspension 2 im Behälter 3. Hinsichtlich der möglichen Ausgestaltung der Austrittsöffnung 17 samt Überlaufrohr 19 für die abgeschiedene, überschüssige Faserstoffsuspension 2.2 wird auf die Figur 1 verwiesen. Die Austrittsöffnung 15 für die gasfreie Faserstoffsuspension 2.1 -in Strömungsrichtung S (Pfeil) derselben gesehen- ein als Überlaufrohr 24 ausgebildeter Überlauf 25 mit einer Überlaufhöhe H_{Ü.1} und einer Überlauflänge L_{Ü.1} vorgeordnet. Hinsichtlich der Ausgestaltung des Überlaufrohrs 24 wird auf die in Figur 1 gemachten Ausführungen zum Überlaufrohr 19 des Überlaufs 20 für abgeschiedene, überschüssige Faserstoffsuspension 2.2 verwiesen.

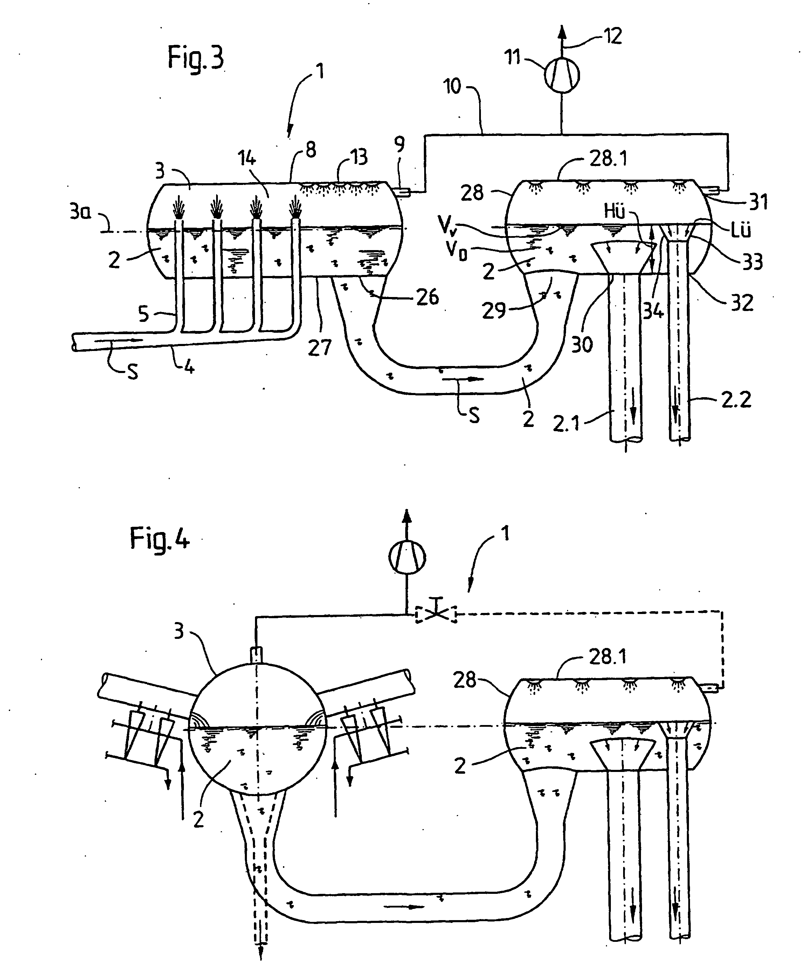

In der Figur 3 ist eine schematisierte und geschnittene Seitenansicht einer dritten vorteilhaften Ausführungsform der erfindungsgemäßen Vorrichtung 1 zum Entgasen einer Faserstoffsuspension 2 dargestellt. Die erfindungsgemäße Vorrichtung 1 zum Entgasen von Faserstoffsuspension 2 besteht aus einem langgestreckten und liegenden zylindrischen Behälter 3 mit einer Behälterachse 3a, dem die der Papier- oder Kartonmaschine aufzugebende Faserstoffsuspension 2 als dünnes Gemisch über mindestens ein Verteilungsrohr 4, von dem eine Mehrzahl von aufeinanderfolgenden Strahlrohren 5 zum Einführen von Faserstoffsuspension 2 in den Behälter 3 ausgehen, zugeführt wird. Hinsichtlich der weiteren konstruktiven Eigenschaften wird auf den in Figur 1 dargestellten Behälter 3 verwiesen. Eine Austrittsöffnung 26 für gasfreie Faserstoffsuspension 2.1 ist in dem Behälter 3 in seinem Behälterboden 27 zugeordnet. Ferner sind Mittel zum Erzeugen eines Unterdrucks im Behälter 3 in Form eines Unterdruckanschlusses 9, einer Unterdruckleitung 10, einer Unterdruckpumpe 11 und einer weiterführenden Leitung 12 in der Nähe der Behälterdecke 8 angeordnet. Weiterhin sind im den Strahlrohren 5 abgewandten Bereich der Behälterdecke 8 mehrere, nicht näher dargestellte Düsen 13 zur Anfeuchtung der nicht mit Faserstoffsuspension 2 berührten Behälterinnenoberfläche 14 angebracht.
Erfindungsgemäß ist die Vorrichtung 1 nun dadurch gekennzeichnet, dass der mindestens einen Austrittsöffnung 26 für die vorzugsweise gasfreie Faserstoffsuspension 2 -in Strömungsrichtung S (Pfeil) derselben gesehen- ein Verweilbehälter in Form eines hydraulischen Stabilisators 28.1 nachgeordnet ist, bestehend aus einem, vorzugsweise langgestreckten und liegenden zylindrischen, Behälter 28, mindestens einer Eintrittsöffnung 29 zum Einführen von aus dem -in Strömungsrichtung S (Pfeil) der vorzugsweise gasfreien Faserstoffsuspension 2 gesehen- vorgeschalteten Behälter 3 kommenden vorzugsweise gasfreien Faserstoffsuspension 2 in den Behälter 28, mindestens je einer im Behälter 28 angebrachten Austrittsöffnung 30, 31, 32 für mindestens eine gasfreie Faserstoffsuspension 2.1, für ein abgeschiedenes Gas 9 und für mindestens eine mittels eines Überlaufs 33 abgeschiedene, überschüssige Faserstoffsuspension 2.2, und mindestens einer Austrittsöffnung 32 für die abgeschiedene, überschüssige Faserstoffsuspension 2.2, der -in Strömungsrichtung S (Pfeil) derselben gesehenein als Überlaufrohr 34 ausgebildeter Überlauf 33 mit einer Überlaufhöhe H_{Ü} und einer Überlauflänge L_{Ü} vorgeordnet ist. Hinsichtlich der Ausgestaltung des Überlaufrohrs 34 wird auf die in Figur 1 gemachten Ausführungen zum Überlaufrohr 19 des Überlaufs 20 für abgeschiedene, überschüssige Faserstoffsuspension 2.2 verwiesen.
Weiterhin weist der erfindungsgemäße hydraulische Stabilisator 28.1 für die vorzugsweise gasfreie Faserstoffsuspension 2 ein Verweilvolumen V_{V} zwischen 0,8 und 100 m³, vorzugsweise zwischen 4 und 70 m³, und eine Verweildauer V_{D} der vorzugsweise gasfreien Faserstoffsuspension 2 im hydraulischen Stabilisator 28.1 zwischen 2 und 60 Sekunden, vorzugsweise zwischen 5 und 20 Sekunden, auf. Überdies ist der hydraulische Stabilisator 28.1 der Austrittsöffnung 26 für die vorzugsweise gasfreie Faserstoffsuspension 2 mittelbar durch einen Schlauch oder eine Rohrleitung nachgeordnet. Der hydraulische Stabilisator 28.1 kann der Austrittsöffnung 26 für Faserstoffsuspension 2 jedoch auch unmittelbar nachgeordnet sein.

Die Figur 4 zeigt eine schematisierte und geschnittene Seitenansicht einer sechsten vorteilhaften Ausführungsform der erfindungsgemäßen Vorrichtung 1 zum Entgasen einer Faserstoffsuspension 2, ähnlich der Figur 3. Der dargestellte Behälter 3 entspricht dem in Figur 2 in anderer Ansicht dargestellten Behälter 3; hinsichtlich dessen Beschreibung wird somit auf Figur 2 verwiesen. Der dargestellte Behälter 28 entspricht dem in Figur 3 in gleicher Ansicht dargestellten Behälter 28; hinsichtlich dessen Beschreibung wird somit auf Figur 3 verwiesen. In Figur 4 ist ferner dargestellt, dass der Behälter 28 optional (gestrichelte Linie) an die Mittel zum Erzeugen eines Unterdrucks in demselben angeschlossen sein.

Zusammenfassend ist festzuhalten, dass durch die Erfindung eine Vorrichtung der eingangs genannten Art geschaffen wird, mit welcher der Überlauf unabhängig von der Lage des mindestens einen Einlaufs beziehungsweise Zulaufs für die Faserstoffsuspension und des mindestens einen Auslaufs für die vorzugsweise entgaste Faserstoffsuspension angeordnet werden kann.

### Bezugszeichenliste

- 1: Vorrichtung (zum Entgasen von Faserstoffsuspension)
- 2: Faserstoffsuspension
- 2.1: Gasfreie Faserstoffsuspension
- 2.2: Abgeschiedene, überschüssige Faserstoffsuspension
- 3: Behälter
- 3a: Behälterachse
- 4: Verteilungsrohr
- 5: Strahlrohr
- 6: Flüssigkeitsstand
- 7: Gas
- 8: Behälterdecke
- 9: Unterdruckanschluss
- 10: Unterdruckleitung
- 11: Unterdruckpumpe
- 12: Leitung
- 13: Düse
- 14: Behälterinnenoberfläche
- 15, 17, 17.1, 26, 30, 31, 32: Austrittsöffnung
- 16, 18: Leitungssystem (Ableitung)
- 19, 24, 34: Überlaufrohr
- 20, 25, 33: Überlauf
- 21: Trichterförmiger Anfangsbereich
- 22: Bewegungsrichtung
- 23: Kammer
- 27: Behälterboden
- 28: Behälter
- 28.1: Hydraulischer Stabilisator
- 29: Eintrittsöffnung

- H_{Ü}, H_{Ü.1}: Überlaufhöhe
- L_{Ü}, L_{Ü.1}: Überlauflänge
- S: Strömungsrichtung (Pfeil)
- α: Öffnungswinkel

## Patentansprüche

1. Vorrichtung (1) zum Entgasen von Faserstoffsuspension (2) bestehend aus
- einem, vorzugsweise langgestreckten und liegenden zylindrischen, Behälter (3) mit einer horizontalen oder annähernd horizontalen Behälterachse (3a);
- mit mindestens einem Verteilungsrohr (4), von dem eine Mehrzahl von aufeinanderfolgenden Strahlrohren (5) zum Einführen von Faserstoffsuspension (2) in den Behälter (3) ausgehen, und/oder mit mindestens einer mit dem Behälter (3) kommunizierenden und ihr Faserstoffsuspension (2) zuführenden Kammer (23), wobei die kommunizierende Kammer (23) oberhalb des Flüssigkeitsstands (6) der zugeführten Faserstoffsuspension (2) im Behälter (3) liegt;
- mindestens je einer im Behälter (3) angebrachten Austrittsöffnung (15, 17, 17.1) für mindestens eine gasfreie Faserstoffsuspension (2.1), für ein abgeschiedenes Gas (7) und für mindestens eine mittels eines Überlaufs (20) abgeschiedene, überschüssige Faserstoffsuspension (2.2);
- Mitteln zum Erzeugen eines Unterdrucks im Behälter (3);
**dadurch gekennzeichnet, dass**
der mindestens einen Austrittsöffnung (17, 17.1) für die abgeschiedene, überschüssige Faserstoffsuspension (2.2) -in Strömungsrichtung (S) derselben gesehen- ein als Überlaufrohr (19) ausgebildeter Überlauf (20) mit einer Überlaufhöhe (H_{Ü}) und einer Überlauflänge (L_{Ü}) vorgeordnet ist.

2. Vorrichtung (1) zum Entgasen von Faserstoffsuspension (2), bestehend aus
- einem, vorzugsweise langgestreckten und liegenden zylindrischen, ersten Behälter (3) mit einer horizontalen oder annähernd horizontalen Behälterachse (3a);
- mit mindestens einem Verteilungsrohr (4), von dem eine Mehrzahl von aufeinanderfolgenden Strahlrohren (5) zum Einführen von Faserstoffsuspension (2) in den ersten Behälter (3) ausgehen, und/oder mit mindestens einer mit dem ersten Behälter (3) kommunizierenden und ihr Faserstoffsuspension (2) zuführenden Kammer (23), wobei die kommunizierende Kammer (23) oberhalb des Flüssigkeitsstands (6) der zugeführten Faserstoffsuspension (2) im ersten Behälter (3) liegt;
- mit mindestens einer Austrittsöffnung (26) für eine gasfreie Faserstoffsuspension (2.1);
- Mitteln zum Erzeugen eines Unterdrucks im Behälter (3);
**dadurch gekennzeichnet, dass**
der mindestens einen Austrittsöffnung (26) für die vorzugsweise gasfreie Faserstoffsuspension (2.1) -in Strömungsrichtung (S) derselben gesehen- ein zweiter Behälter (28) in Form eines hydraulischen Stabilisators (28.1) nachgeordnet ist, bestehend aus
- einem, vorzugsweise langgestreckten und liegenden zylindrischen, zweiten Behälter (28);
- mindestens einer Eintrittsöffnung (29) zum Einführen von aus dem -in Strömungsrichtung (S) der gasfreien Faserstoffsuspension (2.1)gesehenvorgeschalteten ersten Behälter (3) kommenden Faserstoffsuspension (2.1) in den Behälter (28);
- mindestens je einer im zweiten Behälter (28) angebrachten Austrittsöffnung (30, 31, 32) für mindestens eine gasfreie Faserstoffsuspension (2.1), für ein abgeschiedenes Gas (9) und für mindestens eine mittels eines Überlaufs (33) abgeschiedene, überschüssige Faserstoffsuspension (2.2);
- mindestens einer Austrittsöffnung (32) für die abgeschiedene, überschüssige Faserstoffsuspension (2.2), der -in Strömungsrichtung (S) derselben gesehen- ein als Überlaufrohr (34) ausgebildeter Überlauf (33) mit einer Überlaufhöhe (H_{Ü}) und einer Überlauflänge (L_{Ü}) vorgeordnet ist.

3. Vorrichtung (1) nach Anspruch 1 oder 2,
**dadurch gekennzeichnet, dass**
das Überlaufrohr (19, 34) einen trichterförmigen Anfangsbereich (21) mit einem Öffnungswinkel (α) aufweist.

4. Vorrichtung (1) nach Anspruch 3,
**dadurch gekennzeichnet, dass**
der Öffnungswinkel (α) einen Wert zwischen 30° und 80°, vorzugsweise zwischen 40° und 50°, annimmt.

5. Vorrichtung (1) nach einem der vorhergehenden Ansprüche,
**dadurch gekennzeichnet, dass**
das Überlaufrohr (19, 34) einen teleskopartigen Aufbau besitzt und die Überlaufhöhe (H_{Ü}) somit veränderbar ist.

6. Vorrichtung (1) nach einem der vorhergehenden Ansprüche,
**dadurch gekennzeichnet, dass**
das Überlaufrohr (19, 34) samt Ableitung (18) verschiebbar ausgebildet ist und die Überlaufhöhe (H_{Ü}) somit veränderbar ist.

7. Vorrichtung (1) nach Anspruch 6,
**dadurch gekennzeichnet, dass**
die Ableitung (18) des Überlaufrohrs (19, 34) ein in seiner Länge und Form veränderbares Zwischenstück aufweist.

8. Vorrichtung (1) nach einem der vorhergehenden Ansprüche,
**dadurch gekennzeichnet, dass**
das Überlaufrohr (19, 34) einen teleskopartigen und divergenten Aufbau besitzt und die Überlauflänge (L_{Ü}) somit veränderbar ist.

9. Vorrichtung (1) nach einem der vorhergehenden Ansprüche,
**dadurch gekennzeichnet, dass**
das Überlaufrohr (19, 34) mit mindestens einem Rohrteil koppelbar ist und die Überlaufhöhe (H_{Ü}) und/oder die Überlauflänge (L_{Ü}) somit veränderbar ist beziehungsweise sind.

10. Vorrichtung (1) nach einem der vorhergehenden Ansprüche,
**dadurch gekennzeichnet, dass**
die Austrittsöffnung (17) für die abgeschiedene, überschüssige Faserstoffsuspension (2.2) -in Strömungsrichtung (S) derselben gesehen- räumlich zwischen der mindestens einen Eintritts- beziehungsweise Zufuhröffnung für die Faserstoffsuspension (2) und der Austrittsöffnung (15) für die gasfreie Faserstoffsuspension (2.1) angeordnet ist.

11. Vorrichtung (1) nach einem der vorhergehenden Ansprüche,
**dadurch gekennzeichnet, dass**
im Behälter (3) bzw. zweiten Behälter (28) mindestens zwei Austrittsöffnungen (17, 17.1) für abgeschiedene, überschüssige Faserstoffsuspension (2.2) vorhanden sind, wobei mindestens eine Austrittsöffnung (17) mit einem als Überlaufrohr (19) ausgebildetem Überlauf (20) mit einer Überlaufhöhe (H_{Ü}) und einer Überlauflänge (L_{Ü}) versehen ist und die mindestens eine weitere Austrittsöffnung (17.1) mit einem Verschlussdeckel versehen ist.

12. Vorrichtung (1) nach einem der vorhergehenden Ansprüche,
**dadurch gekennzeichnet, dass**
der Austrittsöffnung (15, 30) für die gasfreie Faserstoffsuspension (2.1) -in Strömungsrichtung (S) derselben gesehen- ein als Überlaufrohr (24) ausgebildeter Überlauf (25) mit einer Überlaufhöhe (H_{Ü.1}) und einer Überlauflänge (L_{Ü.1}) vorgeordnet ist.

13. Vorrichtung (1) nach einem der vorhergehenden Ansprüche,
**dadurch gekennzeichnet, dass**
die Mittel zum Erzeugen des Unterdrucks im Behälter (3) je ein Unterdruckanschluss (9), je eine Unterdruckleitung (10) und mindestens eine Unterdruckpumpe (11) mit Leitung (12) sind.

14. Vorrichtung (1) nach einem der vorhergehenden Ansprüche,
**dadurch gekennzeichnet, dass**
im oberen Innenbereich des Behälters (3, 28) mehrere Düsen (13) zur Anfeuchtung der nicht mit der Faserstoffsuspension (2) berührten Behälterinnenoberfläche (14) angebracht sind.

15. Vorrichtung (1) nach einem der vorhergehenden Ansprüche,
**dadurch gekennzeichnet, dass**
das Verteilungsrohr (4) zu der Behälterachse (3a) parallel oder annähernd parallel und ausserhalb des ersten Behälters (3) liegt.

16. Vorrichtung (1) nach einem der Ansprüche 1 bis 14,
**dadurch gekennzeichnet, dass**
das Verteilungsrohr (4) zu der Behälterachse (3a) parallel oder annähernd parallel und innerhalb des ersten Behälters (3) liegt.

17. Vorrichtung (1) einem der Ansprüche 2 bis 16,
**dadurch gekennzeichnet, dass**
der hydraulische Stabilisator (28.1) für die vorzugsweise gasfreie Faserstoffsuspension (2) ein Verweilbehälter mit einer bestimmten Verweildauer (V_{D}) und mit einem bestimmten Verweilvolumen (V_{V}) ist und eine strömungstechnisch optimale Innenkontur aufweist.

18. Vorrichtung (1) nach Anspruch 17,
**dadurch gekennzeichnet, dass**
die strömungstechnisch optimale Innenkontur die Kontur eines langgestreckten und liegenden Zylinders oder eines in Strömungsrichtung (S) der Faserstoffsuspension (2) ausgerichteten konischen Rohres ist.

19. Vorrichtung (1) nach einem der Ansprüche 17 oder 18,
**dadurch gekennzeichnet, dass**
die Verweildauer (V_{D}) der vorzugsweise gasfreien Faserstoffsuspension (2) im hydraulischen Stabilisator (28.1) zwischen 2 und 60 Sekunden, vorzugsweise zwischen 5 und 20 Sekunden, ist.

20. Vorrichtung (1) nach einem der Ansprüche 17 bis 19,
**dadurch gekennzeichnet, dass**
das Verweilvolumen (V_{V}) der vorzugsweisen gasfreien Faserstoffsuspension (2) im hydraulischen Stabilisator (28.1) zwischen 0,8 und 100 m³, vorzugsweise zwischen 4 und 70 m³, ist.

21. Vorrichtung (1) nach einem der Ansprüche 17 bis 20,
**dadurch gekennzeichnet, dass**
der hydraulische Stabilisator (28.1) der Austrittsöffnung (26) für die vorzugsweise gasfreie Faserstoffsuspension (2) unmittelbar nachgeordnet ist.

22. Vorrichtung (1) nach einem der Ansprüche 17 bis 20,
**dadurch gekennzeichnet, dass**
der hydraulische Stabilisator (28.1) der Austrittsöffnung (26) für die vorzugsweise gasfreie Faserstoffsuspension (2) mittelbar nachgeordnet ist.

23. Vorrichtung (1) nach Anspruch 22,
**dadurch gekennzeichnet, dass**
das Mittel zwischen der Austrittsöffnung (26) für die vorzugsweise gasfreie Faserstoffsuspension (2) und dem hydraulischen Stabilisator (28.1) mindestens ein Schlauch oder eine Rohrleitung ist.

## Claims

1. Device (1) for degassing fibrous suspension (2), comprising
- a preferably elongated and horizontal cylindrical container (3) having a horizontal or approximately horizontal container axis (3a);
- having at least one distribution pipe (4), from which a plurality of successive jet pipes (5) for introducing fibrous suspension (2) into the container (3) originate, and/or having at least one chamber (23) communicating with the container (3) and supplying it with fibrous suspension (2), the communicating chamber (23) being located above the liquid level (6) of the supplied fibrous suspension (2) in the container (3);
- in each case at least one outlet opening (15, 17, 17.1) fitted in the container (3) for at least one gas-free fibrous suspension (2.1), for a separated gas (7) and for at least one excess fibrous suspension (2.2) separated out by means of an overflow (20);
- means for producing a vacuum in the container (3);
**characterized in that**
the at least one outlet opening (17, 17.1) for the separated, excess fibrous suspension (2.2), as viewed in the flow direction (S) of the same, is preceded by an overflow (20) formed as an overflow pipe (19) having an overflow height (H₀) and an overflow length (L₀).

2. Device (1) for degassing fibrous suspension (2), comprising
- a preferably elongated and horizontal cylindrical first container (3) having a horizontal or approximately horizontal container axis (3a);
- having at least one distribution pipe (4), from which a plurality of successive jet pipes (5) for introducing fibrous suspension (2) into the first container (3) originate, and/or having at least one chamber (23) communicating with the first container (3) and supplying it with fibrous suspension (2), the communicating chamber (23) being located above the liquid level (6) of the supplied fibrous suspension (2) in the first container (3);
- having at least one outlet opening (26) for a gas-free fibrous suspension (2.1);
- means for producing a vacuum in the container (3);
**characterized in that**
the at least one outlet opening (26) for the preferably gas-free fibrous suspension (2.1), as viewed in the flow direction (S) of the same, is followed by a second container (28) in the form of a hydraulic stabilizer (28.1), comprising
- a preferably elongated and horizontal cylindrical second container (28);
- at least one inlet opening (29) for the introduction of fibrous suspension (2.1) coming from the preceding first container (3), as viewed in the flow direction (S) of the gas-free fibrous suspension (2.1), into the container (28);
- in each case at least one outlet opening (30, 31, 32) fitted in the second container (28) for at least one gas-free fibrous suspension (2.1), for a separated gas (9) and for at least one excess fibrous suspension (2.2) separated out by means of an overflow (33);
- at least one outlet opening (32) for the separated, excess fibrous suspension (2.2), which, in the flow direction (S) of the same, is preceded by an overflow (33) formed as an overflow pipe (34) having an overflow height (H₀) and an overflow length (L₀).

3. Device (1) according to Claim 1 or 2, **characterized in that** the overflow pipe (19, 34) has a funnel-like initial region (21) with an opening angle (α).

4. Device (1) according to Claim 3, **characterized in that** the opening angle (α) assumes a value of between 30° and 80°, preferably between 40° and 50°.

5. Device (1) according to one of the preceding claims, **characterized in that** the overflow pipe (19, 34) has a telescopic structure and the overflow height (H₀) can thus be varied.

6. Device (1) according to one of the preceding claims, **characterized in that** the overflow pipe (19, 34) together with drain line (18) is of displaceable design and the overflow height (H₀) can thus be varied.

7. Device (1) according to Claim 6, **characterized in that** the drain line (18) of the overflow pipe (19, 34) has an intermediate piece of which the length and shape can be varied.

8. Device (1) according to one of the preceding claims, **characterized in that** the overflow pipe (19, 34) has a telescopic and divergent structure and the overflow length (L₀) can thus be varied.

9. Device (1) according to one of the preceding claims, **characterized in that** the overflow pipe (19, 34) can be coupled to at least one tubular part and the overflow height (H₀) and/or the overflow length (L₀) can thus be varied.

10. Device (1) according to one of the preceding claims, **characterized in that** the outlet opening (17) for the separated excess fibrous suspension (2.2), as viewed in the flow direction (S) of the same, is arranged physically between the at least one inlet or feed opening for the fibrous suspension (2) and the outlet opening (15) for the gas-free fibrous suspension (2.1).

11. Device (1) according to one of the preceding claims, **characterized in that** in the container (3) and/or second container (28) there are at least two outlet openings (17, 17.1) for separated excess fibrous suspension (2.2), at least one outlet opening (17) being provided with an overflow (20) formed as an overflow pipe (19) having an overflow height (H₀) and an overflow length (L₀), and the at least one further outlet opening (17.1) being provided with a closure.

12. Device (1) according to one of the preceding claims, **characterized in that** the outlet opening (15, 30) for the gas-free fibrous suspension (2.1), as viewed in the flow direction (S) of the same, is preceded by an overflow (25) formed as an overflow pipe (24) having an overflow height (H_{0.1}) and an overflow length (L_{0.1}).

13. Device (1) according to one of the preceding claims, **characterized in that** the means for producing the vacuum in the container (3) are in each case a vacuum connection (9), in each case a vacuum line (10) and at least one vacuum pump (11) with line (12).

14. Device (1) according to one of the preceding claims, **characterized in that**, in the upper inner region of the container (3, 28) there is fitted a plurality of nozzles (13) for moistening the inner surface (14) of the container not touched by the fibrous suspension (2).

15. Device (1) according to one of the preceding claims, **characterized in that** the distribution pipe (4) is located parallel or approximately parallel to the container axis (3a) and outside the first container (3).

16. Device (1) according to one of Claims 1 to 14, **characterized in that** the distribution pipe (4) is located parallel or approximately parallel to the container axis (3a) and inside the first container (3).

17. Device (1) according to one of Claims 2 to 16, **characterized in that** the hydraulic stabilizer (28.1) for the preferably gas-free fibrous suspension (2) is a residence container with a specific residence time (V_{D}) and with a specific residence volume (V_{V}) and has an internal contour which is optimal in terms of flow.

18. Device (1) according to Claim 17, **characterized in that** the internal contour which is optimal in terms of flow is a contour of an elongated and horizontal cylinder or of a conical pipe aligned in the flow direction (S) of the fibrous suspension (2).

19. Device (1) according to either of Claims 17 and 18, **characterized in that** the residence time (V_{D}) of the preferably gas-free fibrous suspension (2) in the hydraulic stabilizer (28.1) is between 2 and 60 seconds, preferably between 5 and 20 seconds.

20. Device (1) according to one of Claims 17 to 19, **characterized in that** the residence volume (V_{V}) of the preferably gas-free fibrous suspension (2) in the hydraulic stabilizer (28.1) is between 0.8 and 100 m³, preferably between 4 and 70 m³.

21. Device (1) according to one of Claims 17 to 20, **characterized in that** the hydraulic stabilizer (28.1) is arranged directly after the outlet opening (26) for the preferably gas-free fibrous suspension (2).

22. Device (1) according to one of Claims 17 to 20, **characterized in that** the hydraulic stabilizer (28.1) is arranged indirectly after the outlet opening (26) for the preferably gas-free fibrous suspension (2).

23. Device (1) according to Claim 22, **characterized in that** the means between the outlet opening (26) for the preferably gas-free fibrous suspension (2) and the hydraulic stabilizer (28.1) is at least a hose or a pipeline.

## Revendications

1. Dispositif (1) de dégazage de suspension fibreuse (2) se composant
- d'un récipient (3), de préférence allongé et cylindrique couché, avec un axe de récipient (3a) horizontal ou approximativement horizontal,
- avec au moins un tube distributeur (4) duquel part une pluralité de tubes à jets (5) successifs pour l'introduction de suspension fibreuse (2) dans le récipient (3), et/ou avec au moins une chambre (23) communiquant avec le récipient (3) et acheminant la suspension fibreuse (2) vers celui-ci, la chambre communicante (23) se trouvant au-dessus du niveau de liquide (6) de la suspension fibreuse (2) acheminée dans le récipient (3) ;
- d'au moins à chaque fois une ouverture de sortie (15, 17, 17.1) montée dans le récipient (3) pour au moins une suspension fibreuse (2.1) exempte de gaz, pour un gaz séparé (7) et pour au moins une suspension fibreuse (2.2) en excès séparée au moyen d'un trop-plein (20) ;
- de moyens pour produire une dépression dans le récipient (3) ;
**caractérisé en ce**
**qu'**un trop-plein (20) réalisé sous forme de tube de trop-plein (19), avec une hauteur de trop-plein (H_{Ü}) et une longueur de trop-plein (L_{Ü}) est placé avant l'au moins une ouverture de sortie (17, 17.1) pour la suspension fibreuse (2.2) en excès séparée, vu dans la direction d'écoulement (S) de celle-ci.

2. Dispositif (1) de dégazage de suspension fibreuse (2) se composant
- d'un premier récipient (3), de préférence allongé et cylindrique couché, avec un axe de récipient (3a) horizontal ou approximativement horizontal,
- avec au moins un tube distributeur (4) duquel part une pluralité de tubes à jets (5) successifs pour l'introduction de suspension fibreuse (2) dans le premier récipient (3), et/ou avec au moins une chambre (23) communiquant avec le premier récipient (3) et acheminant la suspension fibreuse (2) vers celui-ci, la chambre communicante (23) se trouvant au-dessus du niveau de liquide (6) de la suspension fibreuse (2) acheminée dans le premier récipient (3) ;
- avec au moins une ouverture de sortie (26) pour une suspension fibreuse (2.1) exempte de gaz ;
- de moyens pour produire une dépression dans le récipient (3) ;
**caractérisé en ce que**
un deuxième récipient (28) en forme de stabilisateur hydraulique (28.1) est placé après l'au moins une ouverture de sortie (26) pour la suspension fibreuse (2.1) de préférence exempte de gaz, vu dans la direction d'écoulement (S) de celle-ci, ce récipient se composant
- d'un deuxième récipient (28) de préférence allongé et cylindrique couché ;
- d'au moins une ouverture d'entrée (29) pour l'introduction de suspension fibreuse (2.1) provenant du premier récipient (3) monté avant, vu dans la direction d'écoulement (S) de la suspension fibreuse (2.1) exempte de gaz, dans le récipient (28) ;
- d'au moins à chaque fois une ouverture de sortie (30, 31, 32) montée dans le deuxième récipient (28) pour au moins une suspension fibreuse (2.1) exempte de gaz, pour un gaz séparé (9) et pour au moins une suspension fibreuse (2.2) en excès, séparée au moyen d'un trop-plein (33) ;
- d'au moins une ouverture de sortie (32) pour la suspension fibreuse (2.2) en excès séparée, avant laquelle, vu dans la direction d'écoulement (S) de celle-ci, est disposé un trop-plein (33) réalisé sous forme de tube de trop-plein (34) avec une hauteur de trop-plein (H_{Ü}) et une longueur de trop-plein (L_{Ü}).

3. Dispositif (1) selon la revendication 1 ou 2,
**caractérisé en ce que**
le tube de trop-plein (19, 34) présente une région de début en forme d'entonnoir (21) avec un angle d'ouverture (α).

4. Dispositif (1) selon la revendication 3,
**caractérisé en ce que**
l'angle d'ouverture (α) prend une valeur comprise entre 30° et 80°, de préférence entre 40° et 50°.

5. Dispositif (1) selon l'une quelconque des revendications précédentes,
**caractérisé en ce que**
le tube de trop-plein (19, 34) possède une structure télescopique et la hauteur de trop-plein (H_{Ü}) peut ainsi être modifiée.

6. Dispositif (1) selon l'une quelconque des revendications précédentes,
**caractérisé en ce que**
le tube de trop-plein (19, 34), conjointement avec la dérivation (18), est réalisé de manière déplaçable et la hauteur de trop-plein (H_{Ü}) peut ainsi être modifiée.

7. Dispositif (1) selon la revendication 6,
**caractérisé en ce que**
la dérivation (18) du tube de trop-plein (19, 34) présente une pièce intermédiaire de longueur et de forme variable.

8. Dispositif (1) selon l'une quelconque des revendications précédentes,
**caractérisé en ce que**
le tube de trop-plein (19, 34) possède une structure télescopique et divergente et la longueur de trop-plein (L_{Ü}) peut ainsi être modifiée.

9. Dispositif (1) selon l'une quelconque des revendications précédentes,
**caractérisé en ce que**
le tube de trop-plein (19, 34) peut être accouplé à au moins une partie de tube et la hauteur de trop-plein (H_{Ü}) et/ou la longueur de trop-plein (L_{Ü}) peut, respectivement peuvent être modifiée(s).

10. Dispositif (1) selon l'une quelconque des revendications précédentes,
**caractérisé en ce que**
l'ouverture de sortie (17) pour la suspension fibreuse (2.2) en excès séparée, vu dans la direction d'écoulement (S) de celle-ci, est disposée spatialement entre l'au moins une ouverture d'entrée, respectivement d'alimentation pour la suspension fibreuse (2) et l'ouverture de sortie (15) pour la suspension fibreuse (2.1) exempte de gaz.

11. Dispositif (1) selon l'une quelconque des revendications précédentes,
**caractérisé en ce que**
dans le récipient (3) ou dans le deuxième récipient (28), sont prévues au moins deux ouvertures de sortie (17, 17.1) pour la suspension fibreuse (2.2) en excès, séparée, au moins une ouverture de sortie (17) étant pourvue d'un trop-plein (20) réalisé en tant que tube de trop-plein (19), ayant une hauteur de trop-plein (H_{Ü}) et une longueur de trop-plein (L_{Ü}), et l'au moins une autre ouverture de sortie (17.1) est pourvue d'un couvercle de fermeture.

12. Dispositif (1) selon l'une quelconque des revendications précédentes,
**caractérisé en ce que**
un trop-plein (25) réalisé sous forme de tube de trop-plein (24) avec une hauteur de trop-plein (H_{Ü.1}) et une longueur de trop-plein (L_{Ü.1}) est placé avant l'ouverture de sortie (15, 30) pour la suspension fibreuse (2.1) exempte de gaz, vu dans la direction d'écoulement (S) de celle-ci.

13. Dispositif (1) selon l'une quelconque des revendications précédentes,
**caractérisé en ce que**
les moyens pour produire la dépression dans le récipient (3) sont dans chaque cas un raccord de dépression (9), une conduite de dépression (10) et au moins une pompe à dépression (11) avec une conduite (12).

14. Dispositif (1) selon l'une quelconque des revendications précédentes,
**caractérisé en ce que**
plusieurs buses (13) pour l'humidification de la surface du récipient (14) n'entrant pas en contact avec la suspension fibreuse (2) sont montées dans la région intérieure supérieure du récipient (3, 28).

15. Dispositif (1) selon l'une quelconque des revendications précédentes,
**caractérisé en ce que**
le tube de distribution (4) se situe, par rapport à l'axe du récipient (3a), parallèlement ou approximativement parallèlement et en dehors du premier récipient (3).

16. Dispositif (1) selon l'une quelconque des revendications 1 à 14,
**caractérisé en ce que**
le tube de distribution (4) se situe, par rapport à l'axe du récipient (3a), parallèlement ou approximativement parallèlement et à l'intérieur du premier récipient (3).

17. Dispositif (1) selon l'une quelconque des revendications 2 à 16,
**caractérisé en ce que**
le stabilisateur hydraulique (28.1) pour la suspension fibreuse (2) de préférence exempte de gaz est un récipient de séjour avec une durée de séjour déterminée (V_{D}) et avec un volume de séjour déterminée (V_{V}) et présente un contour interne optimal du point de vue de la technique des fluides.

18. Dispositif (1) selon la revendication 17,
**caractérisé en ce que**
le contour interne optimal du point de vue de la technique des fluides est le contour d'un cylindre allongé et couché ou d'un tube conique orienté dans la direction d'écoulement (S) de la suspension fibreuse (2).

19. Dispositif (1) selon l'une quelconque des revendications 17 ou 18,
**caractérisé en ce que**
la durée de séjour (V_{D}) de la suspension fibreuse (2) de préférence exempte de gaz dans le stabilisateur hydraulique (28.1) est comprise entre 2 et 60 secondes, de préférence entre 5 et 20 secondes.

20. Dispositif (1) selon l'une quelconque des revendications 17 à 19,
**caractérisé en ce que**
le volume de séjour (V_{V}) de la suspension fibreuse (2) de préférence exempte de gaz dans le stabilisateur hydraulique (28.1) est compris entre 0,8 et 100 m³, de préférence entre 4 et 70 m³.

21. Dispositif (1) selon l'une quelconque des revendications 17 à 20,
**caractérisé en ce que**
le stabilisateur hydraulique (28.1) est placé directement après l'ouverture de sortie (26) pour la suspension fibreuse (2) de préférence exempte de gaz.

22. Dispositif (1) selon l'une quelconque des revendications 17 à 20,
**caractérisé en ce que**
le stabilisateur hydraulique (28.1) est placé indirectement après l'ouverture de sortie (26) pour la suspension fibreuse (2) de préférence exempte de gaz.

23. Dispositif (1) selon la revendication 22,
**caractérisé en ce que**
le moyen entre l'ouverture de sortie (26) pour la suspension fibreuse (2) de préférence exempte de gaz et le stabilisateur hydraulique (28.1) est au moins un tuyau flexible ou une conduite tubulaire.
